# EUROPEAN PATENT APPLICATION

(11) **EP 3 611 212 A1**
(43) Date of publication of application: **19.02.2020**
(21) Application number: 18306119.1
(22) Date of filing: 14.08.2018
(51) Int. Cl.: C08G 65/333, C08L 71/02

(54) **COMPOSITION COMPRISING A POLYALKYLENE OXIDE-BASED POLYMER**

(71) Applicant: RHODIA OPERATIONS, 75009 Paris (FR)
(72) Inventor: GHOSH, Soumyadeb, 391410 Vadodara Gujarat (IN); DARJI, Hemang, 390010 Vadodara Gujarat (IN); AL RAHAL AL ORABI, Rabih, 69006 Lyon (FR); LANDELLE, Grégory, 69110 Sainte-Foy-Lès-Lyon (FR); TOURAUD, Franck, 38780 Eyzin-Pinet (FR); VERGELATI, Caroll, 38118 Saint Baudille de la Tour (FR)
(74) Representative: Roussel, Sandrine

(57) **Abstract**

The present invention concerns a composition comprising at least a polyalkylene oxide-based polymer functionalized at one or both ends with a nitrogen-containing heterocyclic group bearing at least a function chosen in the group consisting of primary amine and secondary amine; and a phenol-carbonyl condensation product. The invention also concerns processes to produce such a composition and articles obtained thereof.

## Description

The present invention concerns a composition comprising at least a polyalkylene oxide-based polymer functionalized at one or both ends with a nitrogen-containing heterocyclic group bearing at least a function chosen in the group consisting of primary amine and secondary amine, and a phenol-carbonyl condensation product. The invention also concerns processes to produce such a composition and articles obtained thereof.

### PRIOR ART

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of common general knowledge in the field.

Supramolecular materials are formed by small chain-length polymers or molecules bonded together by physical bonds such as, for example, hydrogen bonds, ionic bonds, hydrophobic bonds, and more particularly hydrogen bonds also known as "H bridges" or "H bonds". An advantage of these supramolecular polymers is that these physical bonds are reversible, that is to say that they may easily break leading to the partial or complete depolymerization of said polymers under the influence of various factors such as temperature. A number of reports demonstrated self-healing properties in such materials and suggested their various applications such as in self-healing coatings. To impart self-healing properties, polymers of low glass-transition temperature (T_{g}) are used to obtain the molecular mobility required for formation of the supramolecular bond, as well as for effective contact between the surfaces to be joined for the healing process.

Supramolecular materials, since made from flexible low-T_{g} polymers, have very low stiffness and dimensional stability. Further, due to supramolecular bonds, which are intrinsically weaker than typical covalent bonds, the supramolecular materials are also mechanically weak.

Cortese et al., J. Am. Chem. Soc., 2012, 134, 3671-3674 reports telechelic supramolecular polymers based on poly(propylene oxide) (PPO), thymine (Thy) and diaminotriazine (DAT) having complementary interactions that can suppress mesoscopic order and thus lead to a counterintuitive change in material properties. It discloses supramolecular polymer with weakly self-complementary stickers (DAT), DAT-PPO-2000-DAT, which is a liquid.

Bras et al., Macromolecules 2013, 46, 9446-9454 reports small angle neutron scattering (SANS) study of the association of heterocomplementary telechelic polypropylene glycol (PPG) polymers, bearing either diaminotriazine (DAT) or thymine (Thy) stickers as end-groups, both in the melt and in dilute solutions. It discloses bifunctional macromonomers DAT-PPG-DAT having weaker self-association.

### INVENTION

The applicant has discovered, entirely surprisingly, that the use of phenol-carbonyl condensation product in a polyalkylene oxide-based polymer functionalized at one or both ends with a nitrogen-containing heterocyclic group bearing at least a function chosen in the group consisting of primary amine and secondary amine; results in a composition having high mechanical strength and inherent self-healing property.

The present invention thus concerns a composition comprising at least
a) a polyalkylene oxide-based polymer functionalized at one or both ends with a nitrogen-containing heterocyclic group bearing at least a function chosen in the group consisting of primary amine and secondary amine; and
b) a phenol-carbonyl condensation product.

Other characteristics, details and advantages of the invention will emerge even more fully upon reading the description which follows.

### DEFINITIONS

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The term "and/or" includes the meanings "and", "or" and also all the other possible combinations of the elements connected to this term.

The terms "comprise" and "comprising" are used in the inclusive, open sense, meaning that additional elements may be included. Throughout this specification, unless the context requires otherwise the word "comprise", and variations, such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "consisting of' means the embodiment necessarily includes the listed components only and no other unlisted components are present.

The term "consisting essentially of' means the embodiment necessarily includes the listed components, but may also include additional unnamed, unrecited elements, notably which do not materially affect the basic and novel characteristic of the composition.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

The term "between" should be understood as being inclusive of the limits.

It is specified that, in the continuation of the description, unless otherwise indicated, the values at the limits are included in the ranges of values which are given. It should be noted that in specifying any range of concentration, any particular upper concentration can be associated with any particular lower concentration.

As used herein, the term "hydrocarbon group" refers to a group mainly consisting of carbon atoms and hydrogen atoms, which group may be saturated or unsaturated, linear, branched or cyclic, aliphatic or aromatic. The term "hydrocarbyl" used in the description and the claims describes radicals which are based on hydrocarbons with the stated number of carbon atoms and which may be pure hydrocarbon radicals but may also have substituents. Hydrocarbon groups of the present invention may be alkyl groups, alkenyl groups, alkynyl groups, aryl groups, alkylaryl groups, aryalkyl groups, heterocyclic groups, and/or alkylheterocyclic groups.

Hydrocarbon groups of the present invention may be alkyl groups, alkenyl groups, alkynyl groups, aryl groups, alkylaryl groups, aryalkyl groups, heterocyclic groups, and/or alkylheterocyclic groups.

As used herein, the terminology "(Cₙ-Cₘ)" in reference to an organic group, wherein n and m are each integers, indicates that the group may contain from n carbon atoms to m carbon atoms per group.

As used herein, "alkyl" should be construed under the ordinary meaning. Alkyl groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or "cycloalkyl" or "alicyclic" or "carbocyclic" groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups. The term "aliphatic group" includes organic moieties characterized by straight or branched-chains, typically having between 1 and 22 carbon atoms. In complex structures, the chains may be branched, bridged, or cross-linked. Aliphatic groups include alkyl groups, alkenyl groups, and alkynyl groups.

As used herein, "alkenyl" or "alkenyl group" refers to an aliphatic hydrocarbon radical which can be straight or branched, containing at least one carbon-carbon double bond. Examples of alkenyl groups include, but are not limited to, ethenyl, propenyl, n-butenyl, i-butenyl, 3-methylbut-2-enyl, n-pentenyl, heptenyl, octenyl, decenyl, and the like. The term "alkynyl" refers to straight or branched chain hydrocarbon groups having at least one triple carbon to carbon bond, such as ethynyl.

The term "aryl group" includes unsaturated and aromatic cyclic hydrocarbons as well as unsaturated and aromatic heterocycles containing one or more rings. Aryl groups may also be fused or bridged with alicyclic or heterocyclic rings that are not aromatic so as to form a polycycle, such as tetralin. An "arylene" group is a divalent analog of an aryl group.

The term "heterocyclic group" includes closed ring structures analogous to carbocyclic groups in which one or more of the carbon atoms in the ring is an element other than carbon, for example, nitrogen, sulfur, or oxygen. Heterocyclic groups may be saturated or unsaturated. Additionally, heterocyclic groups, such as pyrrolyl, pyridyl, isoquinolyl, quinolyl, purinyl, and furyl, may have aromatic character, in which case they may be referred to as "heteroaryl" or "heteroaromatic" groups.

It should be noted that a chemical moiety that forms part of a larger compound may be described herein using a name commonly accorded it when it exists as a single molecule or a name commonly accorded its radical. For example, the terms "pyridine" and "pyridyl" are accorded the same meaning when used to describe a moiety attached to other chemical moieties.

The terms "polyethylene oxide", "PEO", "EO", "polyethylene glycol" and "PEG" are used interchangeably and refer to synthetic polymers of ethylene oxide.

The terms "polypropylene oxide", "PPO", "PO", "polypropylene glycol" and "PPG" are used interchangeably and refer to synthetic polymers of propylene oxide.

### DETAILS OF THE INVENTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively and any and all combinations of any or more of such steps or features.

The polyalkylene oxide-based polymer of the invention functionalized at one or both ends with a nitrogen-containing heterocyclic group bearing at least a function chosen in the group consisting of primary amine and secondary amine, may, for instance, include a polymer having a main chain including a repeating unit represented by a general formula: -(R-O)ₙ- ; wherein R represents an alkylene group having 1 to 14 carbon atoms, and n is the number of repeating units and is a positive integer. n may be comprised for instance between 2 and 20000, preferably from 2 to 2000, more preferably from 4 to 1400, notably from 4 to 800, and specifically from 4 to 400.. The main chain backbone of the polyalkylene oxide-based polymer may be composed of only one type of repeating unit or two or more types of repeating units.

Examples of the main chain backbone of the polyalkylene oxide-based polymer include polyethylene oxides, polypropylene oxides, polytetramethylene oxides (i.e polybutylene oxides), polyethylene oxide-polypropylene oxide copolymers, and polypropylene oxide-polybutylene oxide copolymers. Of these, polypropylene oxides are preferred.

The polyalkylene oxide-based polymer, preferably a polymer of polyethylene oxide and/or polypropylene oxide, may refer to a polymer of varying molecular weights, and of various types, ranging from linear multi-block copolymers, side-chain grafted block copolymers, and hyper-branched block copolymers to star-shaped block copolymers. Said polymers may also comprise end-modified and chain-extended polymers of various types.

Polyalkylene oxide-based polymers of the invention may represent a homopolymer or a copolymer which can be obtained by polymerization of one or more linear, cyclic and/or branched, monounsaturated or polyunsaturated monomers. Polymer may represent a homopolymer or a copolymer which can be obtained by ring-opening polymerization of epoxides, lactones or lactams.

Preferably, the polyalkylene oxide-based polymer, capable of forming all or part of the polymer backbone according to the invention, is of formula PO, in which PO represents a homopolymer or a copolymer which can be obtained by polymerization of one or more linear, cyclic and/or branched, polyunsaturated (preferably diunsaturated), C₂-C₁₀, preferably C₂-C₄ alkylene oxides. PO preferably represents a homopolymer or a copolymer which can be obtained by polymerization of one or more diunsaturated, linear or branched C₂-C₄ alkylene oxides. More preferably, PO represents a polymer chosen from a polyethylene oxides, a polypropylene oxides, polytetramethylene oxides (polybutylene oxides), polyethylene oxide-polypropylene oxide copolymers, and polypropylene oxide-polybutylene oxide copolymers. Of these, polypropylene oxides are preferred.

Polyalkylene oxide-based polymers of the invention may comprise for instance the units as follows:
- -EOₓPO_{y}EO_{z}-, wherein x is from 1 to 1000, y is from 0 to 1000, z is from 1 to 1000;
- -POₓEO_{y}PO_{z}-, wherein x is from 1 to 1000, y is from 0 to 1000, z is from 1 to 1000; or
- -EOₓPO_{y}-, wherein x is from 1 to 1000, y is from 1 to 1000.

The x, y and z values represent the average value of each respective repeat unit. The values of x, y, and z are typically determined based on molecular weight.

Examples of such polymers are for instance copolymers supplied by Solvay under trade name Antarox® (such as Antarox® L61, Antarox® 17R2, etc.), by BASF under trade name Pluronic® (such as Pluronic® 25R4), by DOW under trade name Tergitol® (such Tergitol® L81), etc.

The polyalkylene oxide-based polymer of the invention may have an average molecular weight (Mₙ) comprised between 100 and 80000 g/mol, preferably from 400 to 20000 g/mol measured by NMR spectroscopy or by gel permeation chromatography.

The polyalkylene oxide-based polymer is functionalized at one or both ends with a nitrogen-containing heterocyclic group bearing at least a function chosen in the group consisting of primary amine and secondary amine. The functionalization is preferably carried out at the chain ends. The term telechelic polymer is then used.

The nitrogen-containing heterocyclic group, bearing at least a function chosen in the group consisting of primary amine and secondary amine, may be attached to the polyalkylene oxide-based polymer directly with a single bond or via a linker, such as for instance a linear or branched C₁-C₆ alkylene group, ether function, ester function, amine function, an urea or carbamate functional group, and/or a combination thereof.

The nitrogen-containing heterocyclic group, bearing at least a function chosen in the group consisting of primary amine and secondary amine, may be preferably chosen in the group consisting of (it being understood that all the tautomeric forms are included):
- A substituted or unsubstituted triazine-based group, such as diaminotriazine and melamine;
- A substituted or unsubstituted pyridine-based group, such as diaminopyridine ;
- A substituted or unsubstituted pyrimidine-based group, such as cytosine, and thymine;
- A substituted or unsubstituted pyrazine-based group, such as aminopyrazine;
- A substituted or unsubstituted trimethylene urea-based group, such as bisurea;
- A substituted or unsubstituted imidazolidine-based group, such as imidazolidone, imidazolidine 2,4-dione (hydantoin);
- A substituted or unsubstituted triazole-based group, such as amino-triazole;
- A substituted or unsubstituted isocytosine-based group, such as alkylisocytosine, and substituted ureido pyrimidinone.

The nitrogen-containing heterocyclic group is preferably derived from a heteroaryl group, such as pyridine, diazine, triazine, tetrazine, imidazole, and pirazole.

The nitrogen-containing heterocyclic group, bearing at least a function chosen in the group consisting of primary amine and secondary amine, may have the general structure provided below: 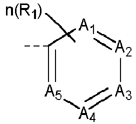 wherein, the ring is a 6-membered aromatic ring wherein A₁, A₂, A₃, A₄, and A₅, are each independently carbon or nitrogen, with the proviso that at least 3 of A₁, A₂, A₃, A₄, and A₅ are carbon atoms, n is from 1 to 4, notably from 1 to 3, notably 1, 2 or 3, each R₁ is independently alkyl, alkenyl, carboxyl, carboxyl ester, amino, hydroxyl, halo, haloalkyl, or heteroaryl, with the proviso that said nitrogen-containing heterocyclic group bears at least a primary amine and/or a secondary amine.

Polyalkylene oxide-based polymer may notably be connected to nitrogen-containing heterocyclic group by a carbon atom of said heterocyclic group, by an oxygen atom of said heterocyclic group or by a nitrogen atom of said heterocyclic group, via a linker or a single bond as previously expressed.

The nitrogen-containing heterocyclic group may bear at least one primary amine function wherein "primary amine" denotes a -NH₂ group.

The nitrogen-containing heterocyclic group may bear at least one secondary amine function wherein "secondary amine" denotes a -NHR group, wherein R is selected from the group consisting of C₁-C₆ alkyl, C₆-C₁₂ aryl, C₇-C₁₂ alkaryl and C₇-C₁₂ alkylaryl groups, wherein the alkyl groups may be linear, branched or cyclic.

Preferably the nitrogen-containing heterocyclic group of the invention is substituted or unsubstituted triazine-based heterocyclic group. More preferably, nitrogen-containing heterocyclic group of the invention is derived from a 4,6-diaminotriazine (DAT) moiety.

The substituted or unsubstituted nitrogen-containing heterocyclic group of the invention may be H-bonding and may comprise at least two sites capable of H-donor capability and at least one site capable of H-acceptor capability (where these two sites are not be fully reacted). The H-donor site may be a H-donor group well known by those skilled in the art. Such an H-donor group may comprise -NH-, -OH or -SH groups. The H-acceptor site may be a H-acceptor site well known by those skilled in the art. Such an H-acceptor site may comprise atoms like O, N or S.

Polyalkylene oxide-based polymer of the invention is preferably a polypropylene oxide polymer functionalized at one or both ends with a substituted or unsubstituted triazine-based heterocyclic group.

Preferably, polyalkylene oxide-based polymer is a polypropylene oxide polymer functionalized at one or both ends with a 4,6-diaminotriazine (DAT) moiety.

Preferably, the functionalized polyalkylene oxide-based polymer, capable of forming all or part of the polymer backbone according to the invention, is of formula X-PO or X-PO-X, in which PO represents a homopolymer or a copolymer which can be obtained by polymerization of one or more linear, cyclic and/or branched, polyunsaturated (preferably diunsaturated), C₂-C₁₀, preferably C₂-C₄ alkylene oxides. PO preferably represents a homopolymer or a copolymer which can be obtained by polymerization of one or more diunsaturated, linear or branched C₂-C₄ alkylene oxides. More preferably, PO represents a polymer chosen from a polyethylene oxide, a polypropylene oxides, polytetramethylene oxides (polybutylene oxides), polyethylene oxide-polypropylene oxide copolymers, and polypropylene oxide-polybutylene oxide copolymers. Of these, polypropylene oxides are preferred.

X represents a nitrogen-containing heterocyclic group bearing at least a function chosen in the group consisting of a primary amine and secondary amine.

X preferably represents a substituted or unsubstituted triazine-based heterocyclic group. More preferably X is a 4,6-diaminotriazine (DAT) moiety.

Most preferentially, functionalized polyalkylene oxide-based polymer is DAT-PPO or DAT-PPO-DAT.

The functionalized polyalkylene oxide based polymers of the invention may have a number-average molecular weight (Mₙ) of between 100 and 80000 g/mol, more preferably between 400 and 20000 g/mol. The number-average molecular weight (Mₙ) may be measured by NMR spectroscopy or by Gel Permeation Chromatography.

Preferably the functionalized polyalkylene oxide-based, ie. polymer a), of the invention is a polymer as follows: 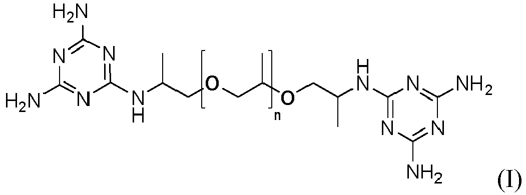 wherein n is comprised between 2 and 2000, preferably between 2 and 1400, more preferably from 4 to 800, more preferably from 4 to 400. 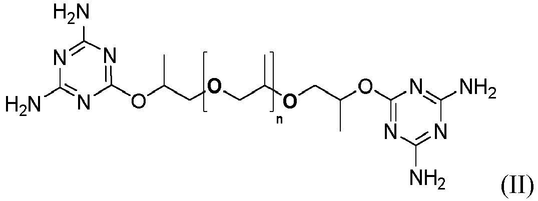 wherein n is comprised between 2 and 2000, preferably between 2 and 1400, more preferably from 4 to 800, more preferably from 4 to 400.

The polyalkylene oxide-based polymer of the invention may be prepared by any process normally employed by a person skilled in the art, such as for instance by polymerization or reaction between a polyalkylene oxide-based polymer intermediate and a compound comprising a nitrogen-containing heterocyclic group bearing at least a function chosen in the group consisting of primary amine and secondary amine.

The polymer a) of the invention can be polymerized in a one-step process in the presence of a suitable catalyst in order to achieve the desired product. Alternatively, the polyalkylene oxide-based polymer may be first polymerized or prepolymerized and subsequently co-reacted with a compound comprising a nitrogen-containing heterocyclic group bearing at least a primary amine or secondary amine, to obtain such product. Such a polymer can be synthesized by either a solution or a bulk reaction process.

The compound comprising a nitrogen-containing heterocyclic group bearing at least a primary amine or secondary amine may comprise a suitable leaving group such as for example halogen. Mention to be made of 2-chloro-4,6-diamino-1,3,5-triazine and 2-bromo-4,6-diamino-1,3,5-triazine.

The polyalkylene oxide-based polymer may be for instance a polyalkylene oxide-based polymer or a polyalkylene oxide-based polymer functionalized at one or both ends with a primary amine or hydroxyl groups.

Reaction between the polyalkylene oxide-based polymer and the compound comprising a nitrogen-containing heterocyclic group bearing at least a primary amine or secondary amine may occur at a temperature from 50°C to 150°C, preferably from a temperature from 80°C to 120°C. Said reaction may be made in presence of solvents, such as mixture of alcohol and water, for instance isopropanol and water. Said reaction may be carried out without catalyst for instance.

Phenol-carbonyl condensation products of the invention are preferably chosen from the group consisting of phenol-aldehyde condensation product and phenol-ketone condensation product.

Phenol-aldehyde or phenol-ketone condensation products are condensation products of phenolic compounds with aldehydes or ketones; in particular a condensation product of at least one phenolic compound with at least one aldehyde and/or one ketone. These condensation reactions are generally catalysed with an acid or a base.

The phenolic compounds may be chosen, alone or as a mixture, from phenol, cresol, xylenol, naphthol, alkylphenols, such as butylphenol, tert-butylphenol, isooctylphenol, nitrophenol, phenylphenol, resorcinol or bisphenol A; or any other substituted phenol.

The aldehyde used most frequently is formaldehyde. However, others may be used, such as acetaldehyde, para-formaldehyde (polyoxymethylene), butyraldehyde, crotonaldehyde, glycoxal and furfural.

As ketone, it is possible to use acetone, methyl ethyl ketone or acetophenone.

According to one particular embodiment of the invention, the phenol-aldehyde condensation product is a condensation product of phenol and formaldehyde.
Preferably, the phenol-carbonyl condensation product is a novolac resin or a resole resin.

Novolacs are phenol-formaldehyde resins with a formaldehyde to phenol molar ratio of less than one. The polymerization is brought to completion using acid-catalysis such as oxalic acid, hydrochloric acid or sulfonate acids. The phenol units are mainly linked by methylene and/or ether groups.

Resole are base-catalysed phenol-formaldehyde resins made with a formaldehyde to phenol ratio of greater than one (usually around 1.5). Phenol, formaldehyde, water and catalyst are usually mixed in the desired amount, depending on the resin to be formed, and are then heated. The first part of the reaction, at around 70°C, forms a thick reddish-brown tacky material, which is rich in hydroxymethyl and benzylic ether groups.

Phenol-carbonyl condensation products are generally have a degree of condensation between 2 and 15. The novolac resins preferably have a degree of condensation between 2 and 15.

Phenol-carbonyl condensation products may have an average molecular weight comprised between 500 and 10000 g/mol, preferably between 500 and 3000 g/mol. It may be measured by gel permeation chromatography (GPC) or by other techniques commonly used by person skilled in the art, as it is well described in Determination of Molecular Weight Distributions of Novolac Resins by Gel Permeation Chromatography, T.R. Dargaville et al., 1996.

The novolac resins used advantageously have an average molecular weight comprised between 500 and 3000 g/mol, preferably between 800 and 2000 g/mol.

As commercial novolac resin, mention may especially be made of the commercial products Durez®, Vulkadur®, Rhenosin® or Nowolac®.

The composition of the invention comprises at least a polyalkylene oxide-based polymer functionalized at one or both ends with a nitrogen-containing heterocyclic group bearing at least a function chosen in the group consisting of primary amine and secondary amine, and a phenol-carbonyl condensation product, may be for instance obtained by blending.

Blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, may be carried out according to several methods such as for instance:
- Dry blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, notably in a mechanical mixer, the solid mixture being then melted, for example via an extrusion process.
- Blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, in melt, especially by melt compounding during a step of extrusion of the polymer. Other melt-compounding methods batch-mixing on a Bradender machine or using a two-roll mill, may be used.
- Blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, in a solvent media, such as for instance ethyl acetate, chloroform and dichloromethane
- Dry blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, in form of fine powders and consolidating them as a single part by melt-compression molding.

Blending of at least one polyalkylene oxide-based polymer functionalized at one or both ends with a nitrogen-containing heterocyclic group bearing at least a function chosen in the group consisting of primary amine and secondary amine, with at least one phenol-carbonyl condensation products, may be carried out at a temperature comprised of 10 to 200°C.

Preferably, the composition of the invention comprises at least a polypropylene oxide-based polymer functionalized at one or both ends with a nitrogen-containing heterocyclic group bearing at least a function chosen in the group consisting of primary amine and secondary amine, and a phenol-carbonyl condensation product. More preferably, composition of the invention comprises at least a polypropylene oxide-based polymer functionalized at one or both ends with a substituted triazine-based heterocyclic group bearing at least a function chosen in the group consisting of primary amine and secondary amine, and a phenol-carbonyl condensation product.

Preferentially, composition of the invention comprises at least a polypropylene oxide-based polymer functionalized at one or both ends with a 4,6-diaminotriazine moiety, and a phenol-carbonyl condensation product.

Most preferentially, composition of the invention comprises at least a polypropylene oxide-based polymer functionalized at one or both ends with a 4,6-diaminotriazine moiety, and a novolac. That is to say, composition comprises DAT-PPO and novolac or DAT-PPO-DAT and novo lac.

The composition according to the invention may comprise one or more different types of novolac resin.

The composition of the invention may comprise from 5% to 95% by weight, preferably from 10% to 80% by weight, notably from 20% to 60% by weight, of the phenol-carbonyl condensation product relative to the total weight of the polymer a) and the phenol-carbonyl condensation product.

The composition may comprise from 5% to 95% by weight, preferably from 20% to 80% by weight, of the polypropylene oxide-based functionalized polymer, relative to the total weight of said polymer a) and the phenol-carbonyl condensation product.

Preferably, the weight ratio between the phenol-carbonyl condensation product and the polymer a) may range from 10:1 to 1:5.

Composition of the present invention may also comprise another polymer or a resin. One or more additives may be added to said composition. They may be, for example, at least: an antioxidant, a plasticizer, a mineral filler, an organic filler, a pigment and/or a dye.

The fillers may be chosen in the group constituted by talc, mica, kaolin, calcium carbonate, calcium silicate, magnesium carbonate; glass fibers, carbon fibers, synthetic polymeric fiber, aramid fiber, aluminium fiber, titanium fiber, magnesium fiber, boron carbide fibers, rock wool fiber, steel fiber, wollastonite and mixtures thereof.

Compositions of the present invention may have a glass transition temperature from -80 °C to 100°C, preferably from -20°C to 100°C, notably from 20°C to 75°C.

Compositions of the present invention may have an elongation at break from 0.5% to 100%, preferably from 1% to 5%. Elongation at break may be measured for instance by using mechanical UTM instrument, which determines the value as strain on the material at break from the change in position of the cross-head, during measurement of the stress-strain characteristics of the material.

Apart from the polymers, additives can additionally be added during the processing to produce the composition of this invention. Such additives may be for instance chosen in the group consisting of: diols, such as linear or branched C₁-C₂₀ alkylene diols, diamines, such as linear or branched C₁-C₂₀ alkylene diamines, diisocyanates, such as linear, branched or cyclic C₁-C₂₀ alkylene diisocyanates, C₁-C₂₀ amino alcohols, C₁-C₂₀ triols, C₁-C₂₀ triamines, C₁-C₂₀ triisocyanates or C₁-C₂₀ polyalcohols.

The composition of the invention may also comprise a polyalkylene oxide-based polymer functionalized at one or both ends with a nitrogen-containing heterocyclic group bearing at least 2 carbonyl functions, notably a polyalkylene oxide-based polymer functionalized at one or both ends with an isocyanuric acid moiety and/or a barbituric acid moiety.

The polyalkylene oxide-based polymer functionalized at one or both ends with a nitrogen-containing heterocyclic group bearing at least 2 carbonyl functions, notably a polyalkylene oxide-based polymer functionalized at one or both ends with an isocyanuric acid moiety and/or a barbituric acid moiety, may have an average molecular weight (Mₙ) comprised between 100 and 80000 g/mol, preferably from 100 to 35000 g/mol measured by NMR spectroscopy or by gel permeation chromatography.

The isocyanuric acid moiety and/or a barbituric acid moiety may be attached to the polyalkylene oxide-based polymer directly with a single bond or via a linker, such as for instance a linear or branched C₁-C₆ alkylene group, C₆-C₁₂ aryl, C₇-C₁₂ alkaryl and C₇-C₁₂ alkylaryl groups, ether function, carbonyl function, ester function, carboxyl function, amine function, amide function, an urea or carbamate functional group, and/or a combination thereof.

The isocyanuric acid moiety may be preferably chosen in the group consisting of (it being understood that all the tautomeric forms are included) a substituted or unsubstituted trioxotriazine-based group, such as isocyanuric acid; notably the isocyanuric acid moiety as follows:

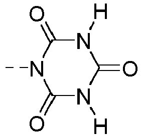

The barbituric acid moiety may be preferably chosen in the group consisting of (it being understood that all the tautomeric forms are included) a substituted or unsubstituted trioxypyrimidine group, such as barbituric acid (or malonylurea or 6-hydroxyuracil), notably the barbituric acid moiety as follows:

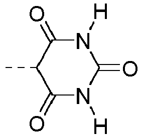

Preferably, polyalkylene oxide-based polymer of the invention is a polypropylene oxide polymer functionalized at one or both ends with isocyanuric acid (ICA), such as ICA-PPO or ICA-PPO-ICA. Polyalkylene oxide-based polymer of the invention may also be a polypropylene oxide polymer functionalized at one or both ends with barbituric acid (BA), such as BA-PPO or BA-PPO-BA.

Preferably the functionalized polyalkylene oxide-based polymer of the invention is a polymer of formula (III) as follows: 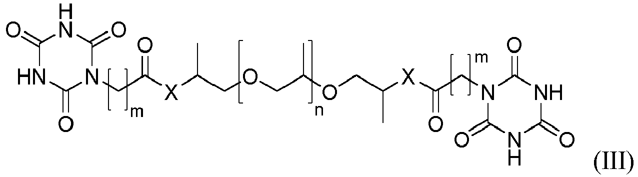 wherein n is comprised between 2 and 800, preferably from 4 to 600, more preferably from 6 to 400, m is comprised between 0 and 20, preferably from 1 to 12, X is an oxygen or a nitrogen atom.

The functionalized polyalkylene oxide-based polymer of the invention mays also be a polymer of formula (IV) as follows: 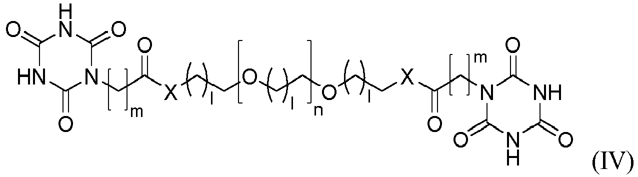 wherein n is comprised between 2 and 800, preferably from 4 to 600, more preferably from 6 to 400, m is comprised between 0 and 20, preferably from 1 to 12,1 is comprised between 1 and 5, X is an oxygen or a nitrogen atom.

The functionalized polyalkylene oxide-based polymer of the invention mays also be a polymer of formula (V) as follows: 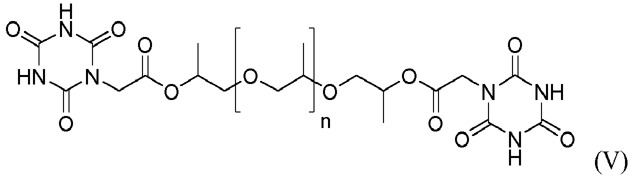 wherein n is comprised between 2 and 800, preferably from 4 to 600, more preferably from 6 to 400.

Such a functionalized polyalkylene oxide-based polymer may be prepared by any process normally employed by a person skilled in the art, such as for instance by polymerization or reaction between a polyalkylene oxide-based polymer intermediate and a compound comprising an isocyanuric acid moiety and/or a barbituric acid moiety. This polymer can be polymerized in a one-step process in the presence of a suitable catalyst in order to achieve the desired product. Alternatively, the polyalkylene oxide-based polymer may be first polymerized or prepolymerized and subsequently co-reacted with a compound comprising an isocyanuric acid moiety and/or a barbituric acid moiety, to obtain such product. Such a polymer can be synthesized by either a solution or a bulk reaction process.

It is perfectly possible to use as raw material a polyalkylene oxide-based polymer comprising at one or both ends a hydroxyl function, or a polyalkylene oxide-based polymer comprising at one or both ends a primary amine function.

The compound comprising an isocyanuric acid moiety and/or a barbituric acid moiety may comprise a suitable leaving group such as for example halogen or a reactive functionality like ester function, amide function, acyl chloride function, isocyanate function.

Compounds comprising an isocyanuric acid moiety and/or a barbituric acid moiety is preferably chosen in the group consisting of: benzyl 2-(2,4,6-trioxo-1,3,5-triazinan-1-yl)acetate, benzyl 2-(2,4,6-trioxohexahydropyrimidin-5-yl)acetate, methyl 2-(2,4,6-trioxo-1,3,5-triazinan-1-yl)acetate, methyl 2-(2,4,6-trioxohexahydropyrimidin-5-yl)acetate, and 1-(2-chloroethyl)-1,3,5-triazinane-2,4,6-trione, 5-(2-chloroethyl)pyrimidine-2,4,6(1H,3H,5H)-trione.

The present invention also relates to an article or a part of an article comprising the composition of at least one polypropylene oxide-based polymer functionalized at one or both ends with 3,5-a diaminotriazine (DAT) moiety, and at least one novolac.

Articles may be for instance, used as additives, coatings, adhesive compositions, sealing compositions, thickeners, composites, gelling agents and binders.

Preferably, these articles are produced from a composition as described above by injection molding, by extrusion or by blow molding.

The composition according to the invention may be for instance used for the following applications:
- additives in the processing of thermoplastics to effect reversible crosslinking; affecting as processing aid, toughening agent and/or for self-healing properties;
- additives in the formulation of rubber;
- as a component in resin formulations for fiber-reinforced composites
- as one of the layers or additive to the formulation for one of the layers in coating;
- anti-corrosion additives, in particular in protective coatings;
- additives to facilitate recycling of thermoplastic substances by destruction of the hydrogen bonds by a specific solvent;
- additives for impact modification in polymers, in particular in polyamides;
- as adhesive or as additive to adhesive formulations; and
- materials for printed circuits.

The composition according to the present invention is very useful in coating applications such as decorative, protective, thermos-reversible and self-healing coatings, adhesive compositions, sealing compositions, as thickener, gelling agents or binder, and in imaging or biomedical applications.

Specific language is used in the description so as to facilitate the understanding of the principle of the invention. It should, however, be understood that no limitation of the scope of the invention is envisioned by the use of this specific language. Modifications, improvements and refinements may especially be envisioned by those skilled in the art of the technical field concerned on the basis of their own general knowledge.

Other details and advantages of the invention will emerge more clearly in the light of the examples below, which are given purely for indicative purposes.

### EXPERIMENTAL PART

The disclosure will now be illustrated with working examples, which is intended to illustrate the working of disclosure and not intended to take restrictively to imply any limitations on the scope of the present disclosure. Other examples are also possible which are within the scope of the present disclosure.

### Preparation of telechelic polypropylene oxide (PPO) end-capped with diamino-triazine (DAT) - termed here as DAT-PPO-DAT:

Amine terminated telechlic polypropylene oxide (PPO) of a molecular weight of 2000, with the trade name of Jeffamine® D2000 was obtained from Huntsman Corporation, UK. The oligomer was reacted with 2-chloro-4,6-diamino-1,3,5-triazine at 90°C in dioxane to obtained PPO terminated with 4,6-diamino triazine units, which act as supramolecular moieties with hydrogen-bonding functionalities. The oligomer produced, PPO-DAT, was purified by dissolving in toluene and repeated by washing with water. The material was subsequently dried at 70°C under vacuum, forming a clear colourless liquid. The polymer was characterized by ¹H-NMR using CDCl₃ as solvent confirming the attachment of the hydrogen bonding moiety, diamino-triazine, to the polymer chain and the bifunctionality of the oligomer was confirmed by the absence of the alkyl amine at the chain-end, evident by the potentiometric titration with isopropanol as a solvent.

¹H-NMR (CDCI 3 , 400 MHz) spectra of DAT-PPO-DAT:
δ : 5.70 (s,2H); 5.23 (s, 8H); 4.21 (m, 2H); 3.65 (m,2H); 3.5 (m,73.6H); 3.36(m, 38.79H); 3.0 (m,2.07); 1.16 (d,6.59H); 1.10 (d,108.72H).

Potentiometric titration of DAT-PPO-DAT: bifunctionality of the oligomer (DAT-PPO-DAT) was confirmed by the absence of the alkyl amine at the chain-end, evident by the potentiometric titration (Metrohm Autotitrator- 905 Titrando & Electrode- I Ecotrode Plus) with isopropanol as a solvent and 0.05N HCl (aqueous solution) as titrant at 25°C.

### Novolac (Phenol Formaldehyde resin):

Novolac resin of two grades were obtained from Plenco, USA and as Nowolak S, from LERG S.A., Poland

Sample details are expressed in Table 1.

**Table 1**

| **Sample Detail** | **PPO -Tetra Amine (DAT-PPO-DAT)** | **Different Grade** | |
|---|---|---|---|
| | | **NOVOLAC Nowolac S** | **NOVOLAC-15314 Plenco, USA** |
| **Appearance** | Viscous liquid | Powder | Powder |
| **Colour** | Transparent | Reddish | Reddish Brown |
| **Melting** / **Softening point (°C)** | NA (liquid) | 90-100 | 140-150 |

### Mixing Procedure - DAT-PPO-DAT and Novolac:

Experiment has been performed with two different grades of Novolac individually. The Novolac resin powder (1 gm) was taken in an aluminium sheet and equal amount of DAT-PPO-DAT (1 gm) was added. The components were mixed well at 25°C, using a spatula for 4 min forming a thick paste. The mixture was then heated to a specific temperature on a hot plate (100°C or 145°C, depending on the grade of the Novolac) with stirring and till the viscosity of the material reduces forming a flowable mass. The yellow to brown coloured viscous liquid was poured into small moulds and casted into specific shapes for further testing (sample size is different for samples - details given below).

### Mechanical Tests:

The compressive strength of the samples was measured using UTM (Zwick Roell, UTM-030), measured according to the following details: For the measurement, samples were moulded in the form of cylindrical shape of diameter 16.1mm and height of 4.55mm and stress on the sample with respect to the strain applied at the rate of 50mm/min was measured. A modulus of about 2 GPa and a strength of 30 MPa were obtained.

### Self-healing Test of Novolac-DAT-PPO-DAT blend:

A sample for a bar prepared as described above, with dimension of 40mm x 10.36mm x 2.45mm was broken into two pieces and reattached by hand pressure for 2 minutes and left it for 15 minutes at 25°C. A weight of 200 gm was then hanged on the healed sample that did not lead to any breakage for a period of at least 3 minutes, demonstrating hence the strength of the healing process for the material.

### Healing study at 70°C:

Sample details are expressed in Table 2.

**Table 2**

| **Sample details** | |
|---|---|
| A | Novolac-15314 |
| | Plenco, USA |
| B | 50wt% Novolac-15314, Plenco USA + 50wt % DAT-PPO-DAT |

Coatings of sample A and B were made on a glass slide. Each of the coatings, measured about 10mm x 10mm, were of a thickness approximately 0.8 to 0.9 mm. Surfaces of the sample A and B were then scratched of length 10mm and of substantial depth with respect to the film thickness (>50% of the film thickness) with a sharp blade at a temperature of 25°C. After heating at 70°C for 10 minutes, scratch on sample B was visually observed to be healed while the one on sample A had remained unaffected.

### Preparation of telechelic polypropylene oxide (PPO) end-capped with isocyanuric acid (ICA) - termed here as ICA-PPO-ICA:

To a 50 mL glass reactor equipped with anchor stirrer were added under nitrogen flush OH-PPO-OH (10 mmol) (Mₙ 2000 g/mol or Mₙ 425 g/mol), benzyl 2-(2,4,6-trioxo-1,3,5-triazinan-1-yl)acetate (20 mmol) and titanium butoxide (0.25wt%). Slow stirring was started and the reactor was immersed in the Wood's alloy bath previously heated at 210°C. These conditions were maintained at atmospheric pressure during 2 h. Then vacuum pump is started and the pressure is slowly decreased to 4 mbar. The conditions are maintained during 4.5 h to improve the conversion. The material was obtained in quantitative yields with conversions up to 90%: a conversion of 85% is reached by using a PPO of Mₙ=2000 g/mol, and a conversion of 90% is reached with a PPO of Mₙ=425 g/mol.

NMR profile of ICA-PP02000-ICA:
¹H (400MHz, DMSO-*d₆*) δ 11.70 (s, 4H, NH), 4.94 (m, 2H, CHCH₃), 4.40 (s, 4H, NCH₂), 3.60-3.30 (m, 112H, CH+CH₂ PPO), 1.16 (d, 6H, CH₃CH), 1.06-1.04 (m, 105H, CH₃ PPO).

### Mixing Procedure - ICA-PPO-ICA and Novolac:

Experiment has been performed with Novolac of type Nowolak S (LERG S.A., Poland). The Novolac resin powder (1 gm) was taken in an aluminium sheet and equal amount of ICA-PPO-ICA (1 gm) was added. The components were mixed well at 25°C, using a spatula for 4 min forming a thick paste. The mixture was then heated at 100°C with stirring and till the viscosity of the material reduces forming a flowable mass. The yellow to brown coloured viscous liquid was poured into a mould and casted into a small bar of dimension about 40 mm x 10.0 mm x 2.5 mm.

### Mixing Procedure - DAT-PPO-DAT and ICA-PPO-ICA and Novolac:

Experiment has been performed with Novolac of type Nowolak S (LERG S.A., Poland). Equal amounts of DAT-PPO-DAT and ICA-PPO-ICA were mixed together at 25°C using a spatula. The Novolac resin powder (1 gm) was taken in an aluminium sheet and an equal amount of the DAT-PPO-DAT/ICA-PPO-ICA mixture (total 1 gm) was added. The mixture was then heated to 140°C with stirring and till the viscosity of the material reduces forming a flowable mass. The yellow to brown coloured viscous liquid was poured into small mould and casted into a small bar of dimension about 40 mm x 10.0 mm x 2.5 mm.

### Measurement of Mechanical Properties

Tensile properties of the test samples, with dimensions of approximately 40 mm x 10.0 mm x 2.5 mm, were measured using UTM (Zwick Roell, UTM-030), by application of strain at the rate of 1 mm/min. During tensile test measurement, failure of some of the samples occurred from the centre or grip. This is specifically observed for the samples which either have no ductility or were healed at 20°C. The samples which have ductility i.e to say DAT-PPO-DAT and 50% Novolac, DAT-PPO-DAT and 50% Novolac-After healing at 50°C, DAT-PPO-DAT and ICA-PPO-ICA and 50% Novolac, DAT-PPO-DAT and ICA-PPO-ICA and 50% Novolac-After healing at 60°C, the tensile test was performed at least up to 15% elongation point.

### Self-healing Study:

For the self-healing studies, the tensile bars of ductile samples were broken into two pieces by hand from the center whereas for the non-ductile materials, the samples that broke near the center of the bar during tensile test were used. Broken pieces of the tensile bar sample were reattached by hand and pressed for 2 minutes and subsequently kept without any extra pressure for another period of 30 minutes at 25°C and 50°C (for ICA-PPO-ICA + Novolac) or 60°C (for DAT-PPO-DAT + ICA-PPO-ICA + Novolac), respectively. Samples which were healed at 50°C or 60°C were kept for another 30 minutes for thermal relaxation, and then samples were again tested by using the method described above. Measurement of mechanical properties before and after healing is expressed in Table 3.

For PPO-DAT and Novolac blend, the sample of dimension 40 mm x 10.0 mm x 2.5 mm was used in Table 3.

**Table 3**

| **S.No.** | **Sample Description** | **Modulus (Mpa)** | **Tensile Strength (MPa)** | **%Elongation** |
|---|---|---|---|---|
| **1** | PPO-2000 + Novolac (1/1 ratio in weight) | Very soft | ND | ND |
| | | | | |
| **2** | 50wt% DAT-PPO-DAT + 50wt% Novolac | 201 | 1.13 | Ductile |
| **3** | 50wt% DAT-PPO-DAT + 50wt% Novolac | 171 | 0.8 | 1.2 |
| | After healing @ 25°C | | | |
| **4** | 50wt% DAT-PPO-DAT + 50wt% Novolac After healing @ 50°C | 144 | 1.1 | Ductile |
| **5** | 25wt% DAT-PPO-DAT + 25wt% ICA-PPO-ICA + 50wt% Novolac | 191 | 1.15 | Ductile |
| **6** | 25wt% DAT-PPO-DAT + 25wt% ICA-PPO-ICA + 50wt% Novolac | 172 | 0.83 | 1.7 |
| | After healing @ 25°C | | | |
| **7** | 25wt% DAT-PPO-DAT + 25wt% ICA-PPO-ICA + 50wt% Novolac | 192 | 1.01 | Ductile |
| | After healing @ 60°C | | | |

| | | | | |
|---|---|---|---|---|
| ND = Measurement was not done (PPO-2000 material was too soft gripping on the sample holder and could not be measured). ND* = Sample broke during start of measurement (not measured as the sample brittle as broke on clamping) Ductile material = elongation of at least 15%. Tensile Strength = The maximum value of the tensile stress Novolac = "Novolak S" grade in all cases | | | | |

It appears then that a composition according to the invention with a sufficient level of stiffness and strength, such as described above, can be self-healed, regaining about 75% of the original strength, after two broken parts of the material are joined together and kept for about half an hour at room temperature. If the self-healing process is performed at higher temperatures, almost full recovery of strength and also the ductility of the material is achieved.

## Claims

1. A composition comprising at least
a) a polyalkylene oxide-based polymer functionalized at one or both ends with a nitrogen-containing heterocyclic group bearing at least a function chosen in the group consisting of primary amine and secondary amine; and
b) a phenol-carbonyl condensation product.

2. A composition according to claim 1, wherein the polyalkylene oxide-based polymer has an average molecular weight (Mₙ) comprised between 100 and 80000 g/mol.

3. A composition according to claim 1 or 2, wherein the polyalkylene oxide-based polymer is selected from the group consisting of polyethylene oxide, polypropylene oxide, polytetramethylene oxide, polyethylene oxide-polypropylene oxide copolymers, polypropylene oxide-polybutylene oxide copolymers or block copolymers of such units.

4. A composition according to any one of claims 1 to 3, wherein the polyalkylene oxide-based polymer is polypropylene oxide.

5. A composition according to any one of claims 1 to 4, wherein the nitrogen-containing heterocyclic group bearing at least a function chosen in the group consisting of primary amine and secondary amine, is selected from a group consisting of substituted or unsubstituted triazine-based group, substituted or unsubstituted pyridine-based group, substituted or unsubstituted pyrimidine-based group, substituted or unsubstituted pyrazine-based group, substituted or unsubstituted trimethylene urea-based group, substituted or unsubstituted imidazolidine-based group, substituted or unsubstituted triazole-based group, substituted or unsubstituted isocytosine-based group.

6. A composition according to any one of claims 1 to 5, wherein the nitrogen-containing heterocyclic group bearing at least a function chosen in the group consisting of primary amine and secondary amine, is 4,6-diaminotriazine moiety.

7. A composition according to any one of claims 1 to 6, wherein the polymer a) is DAT-PPO or DAT-PPO-DAT.

8. A composition according to any one of claims 1 to 7 wherein polymer a) is as follows: 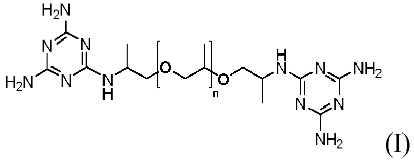 wherein n is comprised between 2 and 2000, preferably from 4 to 400.

9. A composition according to any one of claims 1 to 8 wherein polymer a) is as follows: 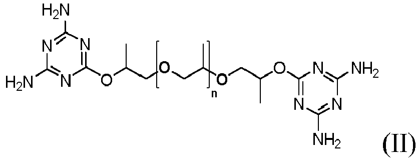 wherein n is comprised between 2 and 2000, preferably from 4 to 400.

10. A composition according to any one of claims 1 to 9, wherein the phenol-carbonyl condensation product is selected from the group consisting of phenol-aldehyde condensation product and phenol-ketone condensation product.

11. A composition according to any one of claims 1 to 10, wherein the phenol-carbonyl condensation product is a novolac resin or a resole resin.

12. A composition according to any one of claims 1 to 11, wherein the composition comprises DAT-PPO and novolac or DAT-PPO-DAT and novolac.

13. A composition according to any one of claims 1 to 12, wherein the weight ratio between phenol-carbonyl condensation product and the polymer a) is from 10:1 to 1:5.

14. A composition according to anyone of claims 1 to 13, wherein it comprise a polyalkylene oxide-based polymer functionalized at one or both ends with a nitrogen-containing heterocyclic group bearing at least 2 carbonyl functions.

15. A composition according to claim 14, wherein the polyalkylene oxide-based polymer functionalized at one or both ends with a nitrogen-containing heterocyclic group bearing at least 2 carbonyl functions is a polyalkylene oxide-based polymer functionalized at one or both ends with an isocyanuric acid moiety and/or a barbituric acid moiety.

16. A composition according to claim 14 or 15, wherein the polyalkylene oxide-based polymer functionalized at one or both ends with a nitrogen-containing heterocyclic group bearing at least 2 carbonyl functions is:
- a polymer of formula (III) as follows: 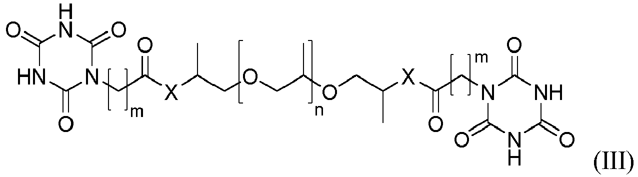 wherein n is comprised between 2 and 800, m is comprised between 0 and 20, X is an oxygen or a nitrogen atom,
or
- a polymer of formula (IV) as follows: 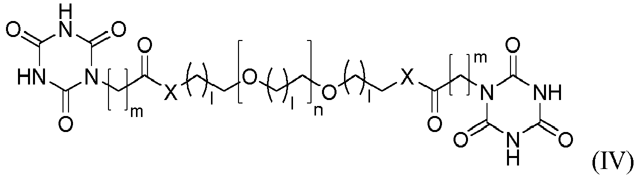 wherein n is comprised between 2 and 800, m is comprised between 0 and 20, 1 is comprised between 1 and 5, X is an oxygen or a nitrogen atom.

17. A process for the production of a composition according to any one of claims 1 to 16 wherein it comprises at least a step of blending at least:
a) a polymer functionalized at one or both ends with a nitrogen-containing heterocyclic group bearing at least a function chosen in the group consisting of primary amine and secondary amine; and
b) a phenol-carbonyl condensation product.

18. An article manufactured from a composition, according to any one of claims 1 to 16.
